# EUROPÄISCHE PATENTSCHRIFT

(11) **EP 1 000 486 B1**
(45) Veröffentlichungstag und Bekanntmachung des Hinweises auf die Patenterteilung: **27.08.2003**
(21) Anmeldenummer: 98943680.3
(22) Anmeldetag: 13.07.1998
(51) Int. Cl.: H04L 12/24, H04L 12/26, H04Q 3/00

(54) **VERFAHREN UND ANORDNUNG ZUM BETREIBEN EINES KOMMUNIKATIONSNETZES**
METHOD AND DEVICE FOR OPERATING A COMMUNICATION NETWORK
PROCEDE ET DISPOSITIF POUR ASSURER LE FONCTIONNEMENT D'UN RESEAU DE COMMUNICATION

(30) Priorität: 28.07.1997 DE 19732435
(43) Veröffentlichungstag der Anmeldung: 17.05.2000
(73) Patentinhaber: SIEMENS AKTIENGESELLSCHAFT, 80333 München (DE)
(72) Erfinder: BÄCKER, Wolfgang, D-81739 München (DE); HEISKE, Harald, D-86150 Augsburg (DE)
(86) Internationale Anmeldenummer: DE9801955
(87) Internationale Veröffentlichungsnummer: WO99007110

(56) Entgegenhaltungen:
- EP-A- 0 367 699
- EP-A- 0 511 925
- EP-A- 0 720 329
- WO-A-94/23514
- WO-A-97/24838

## Beschreibung

Die Erfindung bezieht sich auf ein Verfahren zum Betreiben eines Kommunikationsnetzes, sowie auf eine Anordnung zur Durchführung des Verfahrens. Der Begriff "Daten" bezieht sich im Rahmen dieser Anmeldung auch auf Sprachdaten und Signalisierungsdaten. Der Begriff "Übertragung" umfaßt die Vorgänge beim Senden und/oder Empfangen sowohl in Form von Punkt zu Punkt- als auch in Form von Punkt zu Mehrpunkt-Kommunikation.

Kommunikationsnetze erlauben einen vorübergehenden oder dauernden Informationstransport zwischen räumlich getrennten Kommunikationspartern (Teilnehmern). Die Information kann beispielsweise aus Sprache, Text, Zeichen, Grafiken, Festoder Bewegtbildern bestehen. Die Informationen werden längs eines festen oder variablen Weges, des Übertragungsweges von einer Quelle zu einer oder mehreren Senken geführt. Dieser Übertragungsweg kann aus mehreren Übertragungsabschnitten bestehen, auf denen die Informationen mit verschiedenen Verfahren und Darstellungsformen (analog, digital, im Multiplex, ...) transportiert werden.

Um Kommunikation zwischen bestimmten Teilnehmerstationen zu ermöglichen, werden in der Regel Vermittlungseinrichtungen benötigt. Mit Hilfe dieser Vermittlungseinrichtungen können entlang der Übertragungsabschnitte Kommunikationsverbindungen aufgebaut werden, über die dann bestimmten Teilnehmern bestimmte Telekommunikationsdienste (Fernsprechen (PSTN,ISDN), Fernsprechkonferenz, Telefax, Bildschirmtext, Voice Mail, Text Mail, Fax Mail, Datenübertragung, Mietleitungen, ATM...) erbracht werden können. Ein bestimmter Telekommunikationsdienst kann dabei auch durch den Teil einer Rufnummer angefordert werden.

Eine Kommunikationsverbindung ist im Rahmen der vorliegenden Anmeldung bestimmt durch den physikalischen Pfad, den sie innerhalb des Kommunikationsnetzes durchläuft und/oder den Telekommunikationsdienst, der über diese Kommunikationsverbindung möglich ist und/oder die Teilnehmer, denen über diese Kommunikationsverbindung ein Telekommunikationsdienst erbracht wird. Verschiedene Telekommunikationsdienste können auch auf unterschiedlichen Datenraten, unterschiedlichen Übertragungsverfahren oder unterschiedlichen Kommunikationsprotokollen basieren und somit unterschiedliche technische Voraussetzungen erfordern.

Zur Erbringung dieser Telekommunikationsdienste durch ein Kommunikationsnetz werden eine Vielzahl unterschiedlicher Hardwareeinheiten benötigt, die sich an unterschiedlichen Stellen des Kommunikationsnetzes befinden. Dazu gehören beispielsweise die Hardwareeinheiten der Leitungsendgeräte, der Sende- und Empfangseinrichtungen (Sende-, Empfangsdioden für die Lichtwellenleiterübertragung, Funkantennen, Steuereinrichtungen, ...), der Vermittlungseinrichtungen, der Multiplexer, der Koppelfelder und der Übertragungsmedien (Kupferkabel, Koaxialkabel, Lichtwellenleiter, ...). Ein Fachmann versteht unter Hardwareeinheit auch Teile größerer Hardwareeinheiten, einzelne elektronische Bauteile ( Prozessoren, Speicher,...), Baugruppen, Einsteckeinheiten, Steckkarten, Teile von Datenverarbeitungssystemen und komplette Steuer- und Kontrollsysteme.

Ein Ausfall einer Hardwareeinheit hat in der Regel den Ausfall mehrerer Kommunikationsverbindungen zur Folge, die diese Hardwareeinheit zur Datenübertragung benützen. Aufgrund der Komplexität moderner Kommunikationsnetze ist das Auffinden der ausgefallenen Hardwareeinheiten sowie die Ermittlung der davon betroffenen Kommunikationsverbindungen nur schwer, wenn überhaupt möglich. Die Ermittlung der ausgefallenen Hardwareeinheit und der von dem Ausfall der Hardwareeinheit betroffenen Kommunikationsverbindungen ist allerdings für die zuverlässige Erbringung der angebotenen Telekommunikationsdienste und eine korrekte Vergebührung von großer Bedeutung.

In WO 97/24838 ist ein Verfahren zum Betrieb eines Telekommunikationsnetzes offenbart, bei dem in einer dazu vorgesehenen Datenbank Informationen über dessen topographische Struktur gespeichert sind, die u.a. eine Beschreibung der einzelnen Netzelemente sowie eine Beschreibung der Wirkverhältnisse zwischen diesen Netzelementen umfassen. Diese Informationen werden zur Bestimmung der Zustände der Netzelemente verarbeitet.

Aus EP A 0367699 ist ein Verfahren zum Betreiben eines Datenverarbeitungsnetzes bekannt, bei dem in eine Topographiedatenbank eingetragene Informationen den Zustand von Netzelementen beschreiben. Die Einträge umfassen eine Zuordnung von Kommunikationsverbindungen zu den an deren Enden liegenden Netzknoten sowie Statusinformationen bzgl. der Netzknoten und der Verfügbarkeit der Kommunikationsverbindungen. Diese Einträge werden regelmäßig mit Hilfe von eigens dafür zu den Netzknoten gesendeten Nachrichten aktualisiert.

Der Erfindung liegt die Aufgabe zugrunde, ein Verfahren zur Bestimmung von Zuständen von Kommunikationsverbindungen eines Kommunikationsnetzes anzugeben. Diese Aufgabe wird durch ein Verfahren mit Merkmalen nach Anspruch 1 gelöst.

Die Erfindung beruht demnach auf dem Gedanken, daß Informationen über die Zuordnung der Kommunikationsverbindungen zu den Hardwareeinheiten, die zur Datenübertragung über diese Kommunikationsverbindungen benützt werden, verarbeitet werden, um die Zustände der Kommunikationsverbindungen in Abhängigkeit von den Zuständen der Hardwareeinheiten oder umgekehrt zu bestimmen.

Eine bevorzugte Weiterbildung der Erfindung sieht vor, daß die Zustände der Hardwareeinheiten ermittelt und an Steuereinrichtungen übermittelt werden, und in Abhängigkeit davon mittels der Informationen über die Zuordnung der Kommunikationsverbindungen zu den Hardwareeinheiten die Zustände der Kommunikationsverbindungen bestimmt werden.

Dadurch wird erreicht, daß die vom Ausfall einer Hardwareeinheit betroffenen Kommunikationsverbindungen, Telekommunikationsdienste oder Teilnehmer schnell und effizient ermittelt werden können. Dadurch ist es auch möglich ausgefallene Hardwareeinheiten schnell zu ersetzen. Außerdem kann festgestellt werden, wann, welche Telekommunikationsdienste welchen Teilnehmern nicht zur Verfügung standen. Dies ermöglicht auch eine korrekte Vergebührung. Teilnehmer können online über die Zustände bestimmter Kommunikationsverbindungen informiert werden und können online bestimmte Kommunikationsverbindungen konfigurieren, indem ihnen ein Teilzugriff auf die betreffenden Daten gewährt wird.

Eine weitere vorteilhafte Ausführungsvariante sieht vor, daß Informationen über Zustandsänderungen der Hardwareeinheiten an Steuereinrichtungen übermittelt werden. Es werden also dann Informationen übermittelt, wenn es zu einer Änderung des Zustandes einer Hardwareeinheit kommt. Dadurch werden insgeamt weniger Informationen übermittelt, der Rechenaufwand in den Steuereinrichtungen reduziert und somit der Aufwand zum Betreiben des Kommunikationsnetzes reduziert.

In weiterer Ausgestaltung der Erfindung ist vorgesehen, daß die Zustände der Hardwareeinheiten und/oder die Zustände der Kommunikationsverbindungen durch Teilzustände beschrieben werden, die durch Normen vorgegeben sind. Dies erleichtert auch die Implementierung der Erfindung in bestehende Kommunikationsnetze. Es ist auch denkbar, daß zur Beschreibung der Zustände der Hardwareeinheiten und der Kommunikationsverbindungen genau die gleichen Begriffe verwendet werden. Dadurch erhält der Betreiber eine Beschreibung der Kommunikationsverbindung, die er von den Hardwareeinheiten bereits gewohnt ist.

Um beispielsweise die Kommunikationsverbindung eines säumigen Teilnehmers zu sperren, können bei einer Weiterbildung der Erfindung mittels der Informationen über die Zuordnung der Kommunikationsverbindungen zu den Hardwareeinheiten die für diese Kommunikationsverbindung relevanten Hardwareeinheiten ermittelt werden, und durch die Übermittlung von Steuerinformationen von den Steuereinrichtungen zu den Hardwareeinheiten gezielt solche Hardwareeinheiten gesperrt werden, die zur Sperrung der Kommunikationsverbindung des säumigen Teilnehmers führen.

Das Einbringen der Erfindung in das Systemkonzept Intelligenter Netze, zellularer Mobilfunknetze, Satellitennetze, leitungs- oder paketvermittelter Kommunikationsnetze, Sprachoder Daten-Kommunikationsnetze oder diensteintegrierender Kommunikationsnetze (ISDN) führt zu einem erheblich effizienteren Betreiben der Kommunikationsnetze als dies bisher möglich ist. Die aktuellen Zustände der Hardwareeinheiten und der Kommunikationsverbindungen können online ermittelt und abgefragt werden.

Weiterbildungen der Erfindung ergeben sich aus den nebengeordneten Vorrichtungsansprüchen sowie aus den Unteransprüchen.

Zur Erläuterung von Ausführungsformen der Erfindung dienen die nachstehend aufgelisteten Figuren.

Es zeigen:
FIG 1 eine schematische Darstellung eines erfindungsgemäßen Kommunikationsnetzes.
FIG 2 Skizze einer möglichen Realisierung einer Hardwareeinheit, einer zentralen Steuereinrichtung und der Zuordnung von Kommunikationsverbindungen zu den benützten Hardwareeinheiten.

Die Erfindung wird im folgenden anhand bevorzugter Ausführungsbeispiele und mit Hilfe der Figuren näher beschrieben.

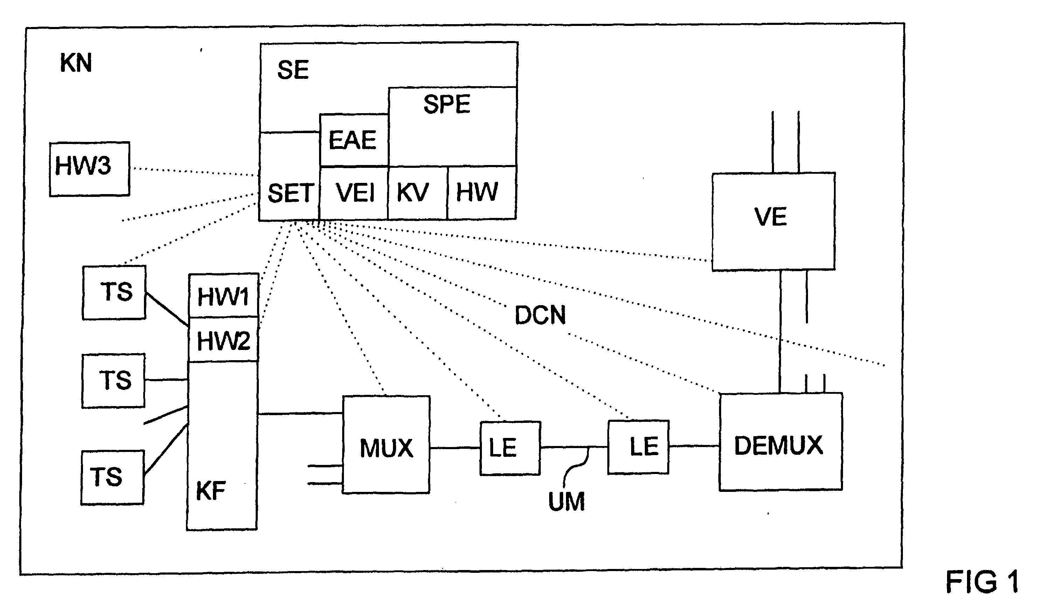

Figur 1 zeigt ein Kommunikationsnetz (KN), das aus mehreren unterschiedlichen Hardwareeinheiten (HW, HW1, HW2, ...) wie Teilnehmerstationen (TS), Vermittlungseinrichtungen (VE), Multiplexern (MUX), Demultiplexern (DEMUX), Leitungsendgeräten (LE), Übertragungsmedien (UM) und Koppelfeldern (KF) besteht. Zwischen diesen Hardwareeinheiten und Steuereinrichtungen (SE) bestehen Verbindungen zur Informationsübermittlung beispielsweise in Form eines Data Communication Networks (DCN).

Mittels in Speichereinrichtungen (SPE) gespeicherter Zuordnungsinformationen und den über ein Empfangsteil (SET) empfangenen Informationen über die Zustände der Hardwareeinheiten können beim Ausfall einer Hardwareeinheit (HW) eines Kommunikationsnetzes die davon betroffenen Kommunikationsverbindungen (KV), Telekommunikationsdienste (TKD) und Teilnehmer (TN) durch ein Datenverarbeitungssystem (VEI) in den Steuereinrichtungen (SE) ermittelt werden und der neue Zustand der Kommunikationsverbindungen (KV) bzw. der Telekommunikationsdienste (TKD) auf einer Ausgabeeinheit (EAE) angezeigt werden.

Der Zustand einzelner Hardwareeinheiten eines Kommunikationsnetzes kann durch unterschiedliche Teilzustände oder Attribute beschrieben werden. Diese Teilzustände können unterschiedliche Werte annehmen. Vorteilhafterweise werden zur Beschreibung des Zustandes einer Hardwareeinheit auch Teilzustände verwendet, die vorgegebenen Normen entsprechen:
- Alarm Status der X.731 der ITU-T
- Administrative State der X.731 der ITU-T
- Operational State der X.731 der ITU-T
- Loop Status beschreibt, ob innerhalb einer Hardwareeinheit zu Testzwecken der Hin- und Rückweg zu einer bestimmten benachbarten Baugruppe kurzgeschlossen ist.

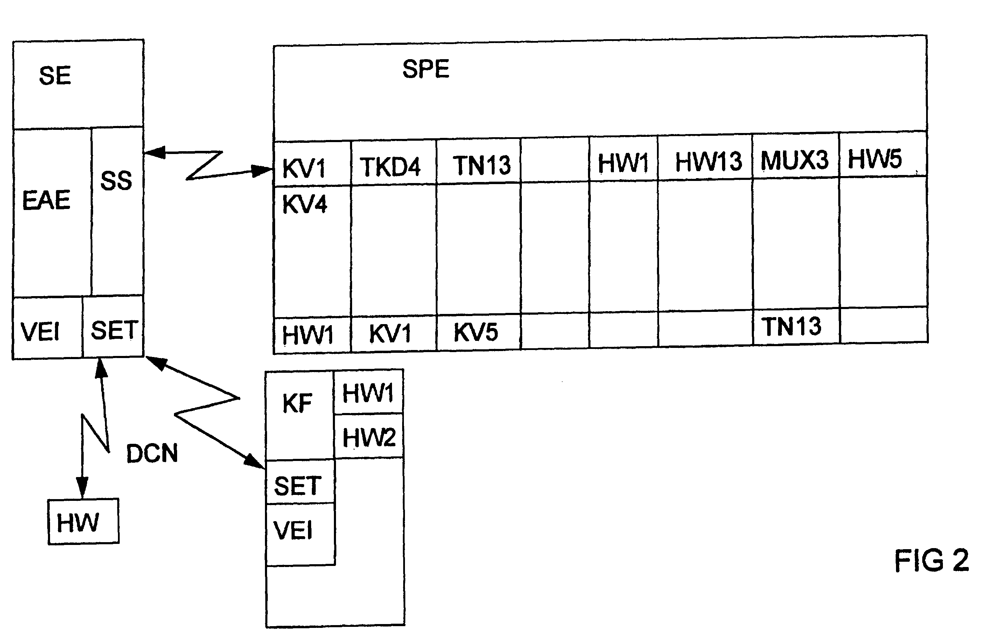

Fällt beispielsweise eine Baugruppe (HW) oder ein Prozessor (HW1) eines Koppelfeldes (KF) aus, so wird wie in Figur 2 gezeigt dieser Ausfall von einer Verarbeitungseinheit (VEI) festgestellt, Informationen darüber weiterverarbeitet und der Zustand der entsprechenden Hardwareeinheit oder des Teils der Hardwareeinheit geändert. Von einem Sendeteil (SET) der Hardwareeinheit wird ein dem Zustand oder der Änderung des Zustandes der Hardwareeinheit entsprechendes Signal ausgegeben. Dieses Signal kann physikalisch zumindest teilweise über das eh schon vorhandene Kommunikationsnetz (KN) oder über eigens zu diesem Zweck vorhandene Übertragungswege an eine zentrale Steuereinrichtung (SE) übermittelt werden. Zur Übermittlung dieser Signale können spezielle Signalisierungskanäle, Signalisierungsprotokolle oder Übertragungsverfahren nach dem Prinzip von Data Communication Networks (DCN) verwendet werden. Zur Überwachung großer Kommunikationsnetze können mehrere zentrale Steuereinrichtungen vorgesehen sein, von denen jede einen Teilbereich des Kommunikationsnetzes überwacht.

In der Steuereinrichtung (SE) werden diese Signale mittels eines Empfangsteils (SET) empfangen und durch ein Datenverarbeitungssystem (VEI) mittels softwaregesteuerter Prozessoren weiterverarbeitet. Informationen über die Zuordnung der Kommunikationsverbindungen zu den Hardwareeinheiten, die zur Datenübertragung über diese Kommunikationsverbindungen benützt werden, sind in einer Datenbank (SPE) oder innerhalb eines Speichermediums (SPE) mittels Zeigerstrukturen realisiert. Dabei müssen die Informationen über die Zuordnung von Kommunikationsverbindungen zu Hardwareeinheiten nicht in der zentralen Steuereinrichtung (SE) selbst gespeichert sein, sondern können auch von externen Speichereinrichtungen (SPE) zu den Steuereinrichtungen (SE) übermittelt werden. Dazu kann die Steuereinrichtung (SE) über eine Schnittstelle (SS) zu diesen internen oder externen Speichereinrichtungen (SPE) verfügen.

Die Speicherung von Informationen über die Zuordnung von Hardwareeinheiten zu Kommunikationsverbindungen kann beim Aufbau des Kommunikationsnetzes oder bei einer Änderung des Kommunikationsnetzes beispielsweise durch das Hinzufügen neuer Hardwareeinheiten oder das Einrichten neuer Kommunikationsverbindungen durch den Eintrag der neuen Hardwareeinheit und der zugehörigen Kommunikationsverbindungen über Eingabeeinheiten (EAE) erfolgen. Es ist auch möglich, daß neue Hardwareeinheiten oder neue Kommunikationsverbindungen automatisch ermittelt werden und zusammen mit den entsprechenden Kommunikationsverbindungen in die Speichereinrichtung (SPE) eingetragen werden.

Mittels dieser Zuordnungsinformationen und den Informationen über die Zustände der Hardwareeinheiten können beim Ausfall einer Hardwareeinheit (HW) eines Kommunikationsnetzes die davon betroffenen Kommunikationsverbindungen (KV), Telekommunikationsdienste (TKD) und Teilnehmer (TN) durch das Datenverarbeitungssystem (VEI) in den Steuereinrichtungen innerhalb weniger Sekunden ermittelt werden und der neue Zustand der Kommunikationsverbindungen (KV) bzw. der Telekommunikationsdienste (TKD) auf einer Ausgabeeinheit (EAE) angezeigt werden. Die Beschreibung des Zustandes einer Kommunikationsverbindung kann dabei auch durch die Begriffe aus den Normen oder durch entsprechende Begriffe erfolgen.

Die aktuellen Zustände der Hardwareeinheiten können in regelmäßigen oder unregelmäßigen Abständen an die Steuereinrichtungen übermittelt werden. Es ist auch möglich, daß die Steuereinrichtungen nur über Zustandsänderungen der Hardwareeinheiten informiert werden. Durch die Zuordnung von Kommunikationsverbindungen zu Hardwareeinheiten können bei der Änderung des Zustands einer Hardwareeinheit durch die Verarbeitung von Zustandsänderungssignalen die Zustände der betroffenen Kommunikationsverbindungen, und somit auch die Zustände der betroffenen Telekommunikationsdienste ermittelt werden.

Informationen über die Zustände der Hardwareeinheiten und der Kommunikationsverbindungen können so weiterverarbeitet werden, daß eventuelle Ausfälle einer Hardwareeinheit automatisch umgangen werden, indem die Kommunikationsverbindung automatisch über andere Hardwareeinheiten geroutet wird. Auch ist es möglich, daß über die Ausgabeeinheit Techniker über zu reparierende Hardwareeinheiten und deren Ort informiert werden.

Ausfallzeiträume bestimmter Kommunikationsverbindungen können ermittelt und gespeichert werden und so weiterverarbeitet werden, daß automatisch eine korrekte Vergebührung erfolgen kann. Es kann bestimmt werden, welche Telekommunikationsdienste, wann, für welche Teilnehmer nicht verfügbar waren. Vom Netzbetreiber werden den Teilnehmern oder Service Subscribern nur die Telekommunikationsdienste in Rechnung gestellt, die verfügbar waren.

Beispielsweise sind bei einer Hardwareeinheit mit 34 Mbps Übertragungskapazität von den vorhandenen 480 Kanälen 241 mit Telefondiensten beschaltet. Wird nun diese Hardwareeinheit "gesperrt", so hat dies eine Änderung des Administrative Status dieser Hardwareeinheit zur Folge. Ein diesem neuen Zustand entsprechendes Signal wird über ein DCN an eine zentrale Steuereinrichtung übermittelt.

Über die Zuordnung von Kommunikationsverbindungen zu Hardwareeinheiten werden die Zustände der betroffenen Kommunikationsverbindungen neu bestimmt und auf der Ausgabeeinheit der zentralen Steuereinrichtung als "gesperrt" gekennzeichnet. Außerdem kann der Netzbetreiber eine Liste aller Hardwareeinheiten sehen, über die eine Kommunikationsverbindung läuft. In dieser Liste ist die geperrte Hardwareeinheit als "gesperrt" markiert. So ist ein schnelles Beheben eventueller Störfälle und eine korrekte Vergebührung möglich.

Bei modernen Datenverarbeitungssystemen kann die Zuordnung von Hardwareeinheiten zu Kommunikationsverbindungen leicht aus einer Zuordnung der Kommunikationsverbindungen zu den Hardwareeinheiten abgeleitet werden. Der Netzbetreiber kann so zur Sperrung einer Kommunikationsverbindung (KV) eines säumigen Subscribers mittels der Steuereinrichtung und der in einer Datenbank (SPE) gespeicherten Informationen über die Zuordnung der Hardwareeinheiten (HW) zu dieser Kommunikationsverbindung (KV) die zur Datenübertragung über diese Kommunikationsverbindung (KV) benützten Hardwareeinheiten (HW) ermitteln.

Von einer Steuereinrichtung (SE) kann über eine Eingabeeinheit bewirkt werden, daß eine zur Datenübertragung über diese Kommunikationsverbindung (KV) benützte Hardwareeinheit (HW) und somit die Kommunikationsverbindung gesperrt wird. Dazu können vom Sendeteil (SET) der Steuereinrichtung (SE) beispielsweise über das DCN Steuersignale an den Empfangsteil (SET) der Hardwareeinheit (HW) übermittelt werden. Die Verarbeitung dieser Signale in der Verarbeitungseinheit (VEI) führt dann zu einer Sperrung dieser Hardwareeinheit.

Bei einem obenbeschriebenen Verfahren zum Management großer Kommunikationsnetze kann es in Ausnahmefällen zu großen Alarmfluten kommen, die gegebenenfalls das ganze Managementsystem lahmlegen oder sogar zum Absturz bringen können.

Eine Reduzierung der von den Hardwareeinheiten übermittelten und den Kommunikationsverbindungen zugeordneten Alarmmeldungen, kann folgendermaßen erfolgen. Der ITU-T Standard X.731 sieht für das Melden von Alarmen den Teilzustand Alarm Status vor. Dieser kann keinen, einen oder mehrere der folgenden Werte haben:
- under repair
- critical
- major
- minor
- alarm outstanding

Es wird unter den Werten des Teilzustandes Alarm Status eine Wertung (critical =4, major =3,....) vorgenommen. Dem schwerwiegensten Alarm wird der höchste Wert zugeordnet. Nur der Wert des aktuell höchstwertigen Alarms wird zur Bestimmung des Zustandes der Kommunikationsverbindung verwendet.

Bei einer weiteren Ausführungsvariante wird eine Zustandsänderungsmeldung ( StateChangeNotification ) von der Hardwareeinheit an eine Steuereinrichtung nur dann übermittelt, wenn sich der Wert des aktuell schwerwiegensten Alarms, mit dem die Hardwareeinheit (HW) behaftet ist, verändert, z.B. beim Übergang "major" nach "critical,major", jedoch keine beim Übergang "major" nach "major,minor". Ändert sich der Alarm Status einer Hardwareeinheit von "critical, major, minor" nach "critical, minor", so erfolgt auch keine Zustandsänderungsmeldung.

Melden mehrere Hardwareeinheiten, die zur Datenübertragung einer Kommunikationsverbindung benützt werden Alarme, so wird zur Beschreibung des Zustandes der Kommunikationsverbindung nur der aktuell höchstwertige Alarm verwendet.

Erhält eine Hardwareeinheit, die zur Datenübertragung von 120 unterschiedlichen Kommunikationsverbindungen benützt wird, wegen des Ausfalls eines Lasers einen kritischen Alarm (AlarmStatus "critical"), so wird den 120 Kommunikationsverbindungen ebenfalls der AlarmStatus "critical" zugeordnet. Die gleiche Hardwareeinheit erhält nach 20 Minuten zusätzlich einen "minor" Alarm (z.B. Ausfall des Batteriepuffers). Es erfolgt nun keine Zuordnung des Alarms zu den Kommunikationsverbindungen. da sich die Wertigkeit des schwerwiegensten Alarms nicht geändert hat. Die Hardwareeinheit hat Alarmstatus "critical, minor", die Kommunikationsverbindungen haben den AlarmStatus "critical". Es entsteht zusätzlich ein major Alarm (z.B. Ausfall des Ersatzspeichers). Es erfolgt wieder keine Zuordnung des Alarms zu den Kommunikationsverbindungen. Die Hardwareeinheit hat AlarmStatus "critcal, major, minor", die Kommunikationsverbindungen hat AlarmStatus "critical". Wenn der Laser wieder funktioniert, wird der "critical" Alarm der Hardwareeinheit gelöscht. Es erfolgt eine Zuordnung des neuen höchstwertigen Alarms zu den Kommunikationsverbindungen. Die Hardwareeinheit hat AlarmStatus "major,minor", die Kommunikationsverbindungen den AlarmStatus "major". Der "minor" Alarm der Hardwareeinheit wird gelöscht. Die Hardwareeinheit hat Alarmstatus "major", die Kommunikationsverbindungen den AlarmStatus "major".

## Patentansprüche

1. Verfahren zur Bestimmung von Zuständen von Kommunikationsverbindungen (KV) eines Kommunikationsnetzes (KN),
bei dem
- erste Informationen über die Zuordnung der Kommunikationsverbindungen zu Hardwareeinheiten (HW), die zur Übertragung von Daten über die Kommunikationsverbindungen benützt werden, in Speichereinrichtungen (SPE) gespeichert werden,
- Zustände - insbesondere geänderte Zustände - der Hardwareeinheiten des Kommunikationsnetzes ermittelt und zweite Informationen über diese Zustände an zumindest eine Steuereinrichtung (SE) übermittelt werden,
- die Zustände der Kommunikationsverbindungen in Abhängigkeit von den zweiten Informationen unter Verarbeitung der ersten Informationen bestimmt werden.

2. Verfahren nach Anspruch 1,
bei dem die Zustände der Hardwareeinheiten und/oder die Zustände der Kommunikationsverbindungen durch bestimmte, durch Normen vorgegebene Teilzustände beschrieben werden.

3. Verfahren nach einem der vorhergehenden Ansprüche,
bei dem zur Sperrung einer Kommunikationsverbindung
- mittels der ersten Informationen Hardwareeinheiten ermittelt werden, die zur Datenübertragung über die zu sperrende Kommunikationsverbindung benützt werden,
- von der Steuereinrichtung zumindest an eine dieser Hardwareeinheiten Informationen übermittelt werden, und
- diese Informationen in der Hardwareeinheit verarbeitet werden und zur Sperrung zumindest eines Teils der Hardwareeinheit führen.

4. Verfahren nach einem der vorhergehenden Ansprüche,
bei dem im Falle einer Hardwareeinheit, die auch durch einen Teilzustand beschrieben wird, der entsprechend der vom Zustand der Hardwareeinheit abhängigen Stärke einer Störung des Betreibens des Kommunikationsnetzes verschiedene Werte annehmen kann, zur Bestimmung des Zustandes der zugehörigen Kommunikationsverbindungen zweite Informationen über denjenigen Wert des Teilzustandes verwendet werden, der einer stärksten Störung des Betreibens des Kommunikationsnetzes entspricht.

5. Verfahren nach dem vorhergehenden Anspruch,
bei dem von den aktuell ermittelten Werten eines Teilzustandes immer nur zweite Informationen über denjenigen Wert von der Hardwareeinheit an die Steuereinrichtungen übermittelt werden, der der stärksten Störung des Betreibens des Kommunikationsnetzes entspricht.

6. Verfahren nach einem der vorhergehenden Ansprüche,
bei dem durch Ein- und/oder Ausgabeeinheiten (EAE) eine Änderung der Zustände der Kommunikationsverbindungen ausgelöst wird.

7. Verfahren nach dem vorhergehenden Anspruch,
bei dem durch die Ein- und/oder Ausgabeeinheiten Informationen über den Zustand der Kommunikationsverbindungen und/oder der Hardwareeinheiten dargestellt werden.

8. Steuereinrichtung (SE), umfassend:
- zumindest eine Schnittstelle (SS) zu internen oder externen Speichereinrichtungen (SPE) zur Speicherung von ersten Informationen über die Zuordnung von Kommunikationsverbindungen (KV) zu Hardwareeinheiten, die zur Übertragung von Daten über die Kommunikationsverbindungen benützt werden, und
- zumindest ein Mittel, insbesondere eine Verarbeitungseinheit (VEI), zur Bestimmung der Zustände der Kommunikationsverbindungen in Abhängigkeit von zweiten Informationen über Zustände der zur Datenübertragung über diese Kommunikationsverbindungen benützten Hardwareeinheiten eines Kommunikationsnetzes (KN) unter Verarbeitung der ersten Informationen.

9. Steuereinrichtung nach Anspruch 8,
umfassend zumindest ein Empfangsteil (SET) zum Empfangen der zweiten Informationen.

10. Steuereinrichtung einem der Ansprüche 8 oder 9,
umfassend zumindest ein Sendeteil (SET) zum Senden von Informationen zur Änderung der Zustände der Hardwareeinheiten.

11. Steuereinrichtung einem der Ansprüche 8 bis 10,
umfassend zumindest eine Eingabe- und/oder Ausgabeeinheit (EAE) zur Auslösung von Änderungen der Zustände der Kommunikationsverbindungen.

12. Steuereinrichtung einem der Ansprüche 8 bis 11,
umfassend zumindest eine Eingabe- und/oder Ausgabeeinheit (EAE) zur Darstellung von Informationen über die Zustände der Kommunikationsverbindungen und/oder der Hardwareeinheiten.

13. Kommunikationsnetz (KN), umfassend:
- zumindest eine Hardwareeinheit (HW), ausgebildet insbesondere als Teilnehmerstation (TS), Vermittlungseinrichtung (VE), Multiplexer (MUX), Demultiplexer (DEMUX), Leitungsendgerät (LE), Übertragungsmedium (UM) oder Koppelfeld (KF),
- zumindest eine Steuereinrichtung (SE) nach einem der Ansprüche 8 bis 12.

14. Kommunikationsnetz nach Anspruch 13,
umfassend zumindest ein Mittel zur Ermittlung der Zustände der Hardwareeinheiten.

15. Kommunikationsnetz nach einem der Ansprüche 13 oder 14,
umfassend zumindest ein Mittel (DCN) zur Übermittlung von Informationen zwischen der Hardwareeinheit und der Steuereinrichtung.

## Claims

1. Method for determining states of communication links (KV) in a communication network (KN), in which
- first information about the assignment of the communication links to hardware units (HW) used for data transmission via the communication links is stored in memory devices (SPE),
- states - in particular changed states - of the hardware units in the communication network are ascertained and second information about these states is transmitted to at least one control device (SE),
- the states of the communication links are determined on the basis of the second information, with processing of the first information.

2. Method according to Claim 1, in which the states of the hardware units and/or the states of the communication links are described by particular substates defined by standards.

3. Method according to one of the preceding claims, in which, to block a communication link,
- the first information is used to ascertain hardware units used for data transmission via the communication link which is to be blocked,
- information is transmitted from the control device to at least one of these hardware units, and
- this information is processed in the hardware unit and causes at least part of the hardware unit to be blocked.

4. Method according to one of the preceding claims, in which, in the case of a hardware unit which is also described by a substate which can assume various values in accordance with the severity of the fault in the operation of the communication network, which depends on the state of the hardware unit, the state of the associated communication links is determined using second information about that value of the substate which corresponds to the most severe fault in the operation of the communication network.

5. Method according to the preceding claim, in which, of the currently ascertained values of a substate, only second information about that value of the hardware unit which corresponds to the most severe fault in the operation of the communication network is ever transmitted to the control devices.

6. Method according to one of the preceding claims, in which input and/or output units (EAE) trigger a change in the states of the communication links.

7. Method according to the preceding claim, in which the input and/or output units show information about the state of the communication links and/or of the hardware units.

8. Control device (SE) comprising:
- at least one interface (SS) to internal or external memory devices (SPE) for storing first information about the assignment of communication links (KV) to hardware units used for data transmission via the communication links, and
- at least one means, in particular a processing unit (VEI), for determining the states of the communication links on the basis of second information about states of the hardware units in a communication network (KN) which are used for data transmission via these communication links, with processing of the first information.

9. Control device according to Claim 8, comprising at least one reception part (SET) for receiving the second information.

10. Control device according to either of Claims 8 or 9, comprising at least one transmission part (SET) for transmitting information for changing the states of the hardware units.

11. Control device according to one of Claims 8 to 10, comprising at least one input and/or output unit (EAE) for triggering changes in the states of the communication links.

12. Control device according to one of Claims 8 to 11, comprising at least one input and/or output unit (EAE) for showing information about the states of the communication links and/or of the hardware units.

13. Communication network (KN), comprising:
- at least one hardware unit (HW), particularly in the form of a subscriber station (TS), switching centre (VE), multiplexer (MUX), demultiplexer (DEMUX), line terminating unit (LE), transmission medium (UM) or switching matrix (KF),
- at least one control device (SE) according to one of Claims 8 to 12.

14. Communication network according to Claim 13, comprising at least one means for ascertaining the states of the hardware units.

15. Communication network according to either of Claims 13 or 14, comprising at least one means (DCN) for transmitting information between the hardware unit and the control device.

## Revendications

1. Procédé de détermination d'états de liaisons de communication (KV) d'un réseau de communication (KN), dans lequel
- des premières informations sur l'affectation des liaisons de communication à des unités hardware (HVV) utilisées aux fins du transfert de données via les liaisons de communication sont mises en mémoire dans des dispositifs de mémoire (SPE);
- des états - en particulier des états modifiés - des unités hardware du réseau de communication sont déterminés et des deuxièmes informations sur lesdits états sont transmises à au moins un dispositif de commande (SE);
- les états des liaisons de communication sont définis en dépendance des deuxièmes informations moyennant le traitement des premières informations.

2. Procédé selon la revendication 1, dans lequel les états des unités hardware et/ou les états des liaisons de communication sont décrits par certains états partiels prédéterminés par des normes.

3. Procédé selon l'une des revendications précédentes, dans lequel, aux fins du blocage d'une liaison de communication,
- des unités hardware utilisées pour le transfert de données via la liaison de communication à bloquer sont déterminées au moyen des premières informations;
- des informations sont transmises par le dispositif de commande à l'au
- moins une desdites unités hardware et
- lesdites informations sont traitées dans l'unité hardware et entraînent le blocage d'au moins une partie de l'unité hardware.

4. Procédé selon l'une des revendications précédentes, dans lequel, dans le cas d'une unité hardware également décrite par un état partiel, lequel peut prendre différentes valeurs conformément à l'intensité, dépendante de l'état de l'unité hardware, d'une perturbation de l'exploitation du réseau de communication, sont utilisées, pour déterminer l'état des liaisons de communication associées, des deuxièmes informations sur la valeur de l'état partiel qui correspond à une perturbation la plus intense de l'exploitation du réseau de communication.

5. Procédé selon la revendication précédente, dans lequel ne sont jamais transmises, par l'unité hardware aux dispositifs de commande et des valeurs d'un état partiel actuellement déterminées, que des deuxièmes informations sur la valeur qui correspond à la plus forte perturbation de l'exploitation du réseau de communication.

6. Procédé selon l'une des revendications précédentes, dans lequel une modification des états des liaisons de communication est déclenchée par des unités d'entrée et/ou de sortie (EAE).

7. Procédé selon la revendication précédente, dans lequel des informations sur l'état des liaisons de communication et/ou des unités hardware sont représentées par les unités d'entrée et/ou de sortie.

8. Dispositif de commande (SE) comprenant:
- au moins une interface (SS) vers des dispositifs de mémoire (SPE) internes ou externes pour la mise en mémoire de premières informations sur l'affectation de liaisons de communication (KV) à des unités hardware utilisées pour le transfert de données via les liaisons de communication, et
- au moins un moyen, en particulier une unité de traitement (VEI) pour déterminer, moyennant le traitement des premières informations, les états des liaisons de communication en dépendance de deuxièmes informations sur des états des unités hardware d'un réseau de communication (KN) utilisées pour le transfert de données via lesdites liaisons de communication.

9. Dispositif de commande selon la revendication 8, comprenant au moins un élément récepteur (SET) pour la réception des deuxièmes informations.

10. Dispositif de commande selon l'une des revendications 8 ou 9, comprenant au moins un élément émetteur (SET) pour l'émission d'informations pour modifier les états des unités hardware.

11. Dispositif de commande selon l'une des revendications 8 à 10, comprenant au moins une unité d'entrée et/ou de sortie (EAE) pour déclencher des modifications des états des liaisons de communication.

12. Dispositif de commande selon l'une des revendications 8 à 11, comprenant au moins une unité d'entrée et/ou de sortie (EAE) pour représenter des informations sur les états des liaisons de communication et/ou des unités hardware.

13. Réseau de communication (KN) comprenant:
- au moins une unité hardware (HW), plus particulièrement réalisée comme station d'abonné (TS), dispositif de commutation (VE), multiplexeur (MUX), démultiplexeur (DEMUX), terminal de ligne (LE), milieu de transmission (UM) ou champ de couplage (KF),
- au moins un dispositif de commande (SE) selon l'une des revendications 8 à 12.

14. Réseau de communication selon la revendication 13, comprenant au moins un moyen de détermination des états des unités hardware.

15. Réseau de communication selon l'une des revendications 13 ou 14, comprenant au moins un moyen (DCN) de transmission d'informations entre l'unité hardware et l'unité de commande.
